(19) Europäisches Patentamt
European Patent Office
Office européen des brevets

(11) **EP 4 296 316 A1**

(12) **EUROPEAN PATENT APPLICATION**
published in accordance with Art. 153(4) EPC

(43) Date of publication:
**27.12.2023 Bulletin 2023/52**

(21) Application number: **21935079.0**

(22) Date of filing: **01.07.2021**

(51) International Patent Classification (IPC):
***C08L 53/02*** *(2006.01)*    ***C08J 5/18*** *(2006.01)*

(52) Cooperative Patent Classification (CPC):
**C08J 5/18; C08L 53/02**

(86) International application number:
**PCT/JP2021/025044**

(87) International publication number:
**WO 2022/208919 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021  JP 2021057825**

(71) Applicant: **Denka Company Limited
Tokyo 103-8338 (JP)**

(72) Inventors:
• **NAKANISHI, Soichiro
  Tokyo 103-8338 (JP)**
• **NAKAMURA, Yuya
  Tokyo 103-8338 (JP)**
• **YAKUNO, Hitomi
  Tokyo 103-8338 (JP)**
• **SAWASATO, Tadashi
  Tokyo 103-8338 (JP)**

(74) Representative: **Gulde & Partner
Patent- und Rechtsanwaltskanzlei mbB
Wallstraße 58/59
10179 Berlin (DE)**

(54) **BLOCK COPOLYMER COMPOSITION, HEAT-SHRINKABLE FILM, AND CONTAINER**

(57)    The present invention aims to provide: a block copolymer composition capable of realizing a heat-shrinkable film with good shrinkage finishability while maintaining a balance among moderate flexural modulus, tensile breaking strength, flowability, and glass transition temperature; a heat-shrinkable film using the block copolymer composition; and a container to which the heat-shrinkable film is attached.

Provided is a block copolymer composition containing at least one kind of a block copolymer having a vinyl aromatic hydrocarbon monomer unit and a conjugated diene monomer unit, wherein the block copolymer composition satisfies following (1)-(4):

(1) when a total of the vinyl aromatic hydrocarbon monomer unit and the conjugated diene monomer unit in the block copolymer composition is taken as 100 mass%, a content of the conjugated diene monomer unit is 10-20 mass%;

(2) the block copolymer composition contains 60-100 mass% of the block copolymer having a structure represented by a following general formula P1:

$$(S)-[(S/B)]2 \qquad (P1)$$

in the general formula P1, (S) is a polymer chain of the vinyl aromatic hydrocarbon monomer unit, and (S/B) is a copolymer chain having the vinyl aromatic hydrocarbon monomer unit and the conjugated diene monomer unit;

(3) a number average molecular weight of the block copolymer contained in the block copolymer composition is 100,000-200,000; and

(4) when a storage modulus measured at 70°C and a storage modulus measured at 100°C in dynamic viscoelasticity measurement measured in accordance with JIS K7244-1 and JIS K7244-5 under conditions of a temperature rising rate of 4°C/min and a frequency of 1 Hz are each defined as E'70 and E'100, a calculated value V based on a following calculation formula F1 is $0.5 \times 10^{16}$ - $2.0 \times 10^{16}$

EP 4 296 316 A1

$$V = E'70 \times (E'70 - E'100)/30 \qquad (F1).$$

$$V = E'70 \times (E'70 - E'100)/30 \qquad (F1).$$

## Description

### Technical Field

The present invention relates to a block copolymer composition, a heat-shrinkable film, and a container.

### Background Art

A heat-shrinkable film is used as a packaging film or a label for a PET bottle beverage or the like. It is disclosed in Patent Literature 1 that a heat-shrinkable film with excellent natural shrinkage resistance can be obtained by using a predetermined block copolymer consisting of a vinyl aromatic hydrocarbon monomer and a conjugated diene monomer.

### Citation List

### Patent Literature

[Patent Literature 1] JP-B-3543917

### Summary of Invention

### Technical Problem

When the heat-shrinkable film using the block copolymer (composition) is used as a label for a PET bottle beverage or the like, it is desirable that there be no distortion in the printed characters and no shrinkage errors such as wrinkling after shrinkage, that is, that the appearance after heat-shrinkage (shrinkage finishability) is good. However, it is also necessary to maintain the balance among the properties required for the block copolymer (composition) as a material, such as glass transition temperature and flowability when processed into the heat-shrinkable film, and elastic modulus and breaking strength in an ordinary temperature range, while satisfying these properties. In this case, the shrinkage finishability is the result of the shrinkage behavior of the block copolymer (composition) in a stretched state when the temperature is continuously changed over a relatively wide range of about several tens of degrees Celsius. On the other hand, the glass transition temperature and flowability, which are indicators of the conditions for processing the block copolymer (composition) into the heat-shrinkable film, and the elastic modulus and breaking strength, which are the guides for the mechanical properties when the heat-shrinkable film is used (mainly in the ordinary temperature range), are items that are evaluated without assuming the case in which the temperature of the block copolymer (composition) itself changes significantly. Therefore, it is difficult to achieve the balance between the both, and the structure and composition of the block copolymer (compositions) that achieve both the shrinkage finishability and the mechanical and thermal properties, as well as the requirements these properties should satisfy, have been unclear so far.

The present invention has been made by taking such a circumstance into consideration, and aims to provide a block copolymer composition capable of realizing a heat-shrinkable film with good shrinkage finishability while maintaining a balance among moderate flexural modulus, tensile breaking strength, flowability, and glass transition temperature. The present invention also aims to provide a heat-shrinkable film using the block copolymer composition and a container to which the heat-shrinkable film is attached.

### Solution to Problem

According to the present invention, provided is a block copolymer composition containing at least one kind of a block copolymer having a vinyl aromatic hydrocarbon monomer unit and a conjugated diene monomer unit, wherein the block copolymer composition satisfies following (1)-(4):

(1) when a total of the vinyl aromatic hydrocarbon monomer unit and the conjugated diene monomer unit in the block copolymer composition is taken as 100 mass%, a content of the conjugated diene monomer unit is 10-20 mass%;

(2) the block copolymer composition contains 60-100 mass% of a block copolymer having a structure represented by a following general formula P1:

$$(S)-[(S/B)]_2 \qquad (P1)$$

in the general formula P1, (S) is a polymer chain of the vinyl aromatic hydrocarbon monomer unit, and (S/B) is a copolymer chain having the vinyl aromatic hydrocarbon monomer unit and the conjugated diene monomer unit;

(3) a number average molecular weight of the block copolymer contained in the block copolymer composition is 100,000-200,000; and

(4) when a storage modulus measured at 70°C and a storage modulus measured at 100°C in dynamic viscoelasticity measurement measured in accordance with JIS K7244-1 and JIS K7244-5 under conditions of a temperature rising rate of 4°C/min and a frequency of 1 Hz are each defined as E'70 and E'100, a calculated value V based on a following calculation formula F1 is $0.5 \times 10^{16}$ - $2.0 \times 10^{16}$

$$V = E'70 \times (E'70 - E'100)/30 \qquad (F1).$$

It should be noted that, in the present specification, the tilde symbol "-" is used to indicate a numerical value range that includes the numerical values listed therebefore and thereafter. Specifically, the description "X-Y" (X and Y are both numerical values) indicates that being "X or greater and Y or less".

Hereinafter, various embodiments of the present invention will be exemplified. The embodiments shown below can be combined with each other.

According to another aspect of the present invention, provided is a heat-shrinkable film containing the above-mentioned block copolymer composition.

According to another aspect of the present invention, provided is a container to which the above-mentioned heat-shrinkable film is attached.

**Description of Embodiments**

Hereinafter, embodiments of the present invention will be explained. Various distinctive features shown in the following embodiments can be combined with each other. In addition, an invention can be established independently for each of the distinctive features.

1. Block Copolymer Composition

A block copolymer composition according to one embodiment of the present invention is a block copolymer composition containing at least one kind of block copolymer having a vinyl aromatic hydrocarbon monomer unit and a conjugated diene monomer unit.

The block copolymer is a block copolymer having the vinyl aromatic hydrocarbon monomer unit and the conjugated diene monomer unit. The block copolymer is a copolymer synthesized by block copolymerization of a vinyl aromatic hydrocarbon monomer and a conjugated diene monomer. The block copolymer is a copolymer having a plurality of block chains constituted by the vinyl aromatic hydrocarbon monomer unit and/or the conjugated diene monomer unit.

The vinyl aromatic hydrocarbon monomer unit is the constituent unit of the copolymer derived from the vinyl aromatic hydrocarbon monomer used for the block copolymerization. Examples of the vinyl aromatic hydrocarbon monomer unit include styrene, o-methylstyrene, p-methylstyrene, p-tert-butylstyrene, 2,4-dimethylstyrene, 2,5-dimethylstyrene, $\alpha$-methylstyrene, vinylnaphthalene, and vinylanthracene. In one aspect, the vinyl aromatic hydrocarbon monomer unit is preferably styrene. These monomers may be used alone, or two or more of these may be used in combination.

The conjugated diene monomer unit is the constituent unit of the copolymer derived from the conjugated diene monomer used for the block copolymerization. Examples of the conjugated diene monomer unit include 1,3-butadiene, 2-methyl-1,3-butadiene (isoprene), 2,3-dimethyl-1,3-butadiene, 1,3-pentadiene, and 1,3-hexadiene. In one aspect, the conjugated diene monomer unit is preferably 1, 3-butadiene or isoprene. These monomers may be used alone, or two or more of these may be used in combination.

The block copolymer having the vinyl aromatic hydrocarbon monomer unit and the conjugated diene monomer unit can be obtained by a living anionic polymerization reaction using an organolithium compound as a polymerization initiator in an organic solvent. Since almost all of the vinyl aromatic hydrocarbon and the conjugated diene used in the polymerization reaction may be converted to a polymer in living anionic polymerization, a block copolymer having an arbitrary primary structure can be obtained by changing the amount and the order of addition thereof.

The block copolymer composition satisfies at least the following conditions (1) to (4).

(1) When the total of the vinyl aromatic hydrocarbon monomer unit and the conjugated diene monomer unit in the block copolymer composition is taken as 100 mass%, the content of the conjugated diene monomer unit is 10-20 mass%.

(2) The block copolymer composition contains 60-100 mass% of the block copolymer having the structure represented by the following general formula P1:

$$(S)-[(S/B)]_2 \qquad (P1)$$

in the general formula P1, (S) is the polymer chain of the vinyl aromatic hydrocarbon monomer unit, and (S/B) is the copolymer chain having the vinyl aromatic hydrocarbon monomer unit and the conjugated diene monomer unit.
(3) The number average molecular weight of the block copolymer contained in the block copolymer composition is 100,000-200,000.
(4) When the storage modulus measured at 70°C and the storage modulus measured at 100°C in dynamic viscoelasticity measurement measured in accordance with JIS K7244-1 and JIS K7244-5 under conditions of a temperature rising rate of 4°C/min and a frequency of 1 Hz are each defined as E'70 and E'100, the calculated value V based on the following calculation formula F1 is $0.5 \times 10^{16}$ - $2.0 \times 10^{16}$

$$V = E'70 \times (E'70 - E'100)/30 \qquad (F1).$$

When the total of the vinyl aromatic hydrocarbon monomer unit and the conjugated diene monomer unit in the block copolymer composition is taken as 100 mass%, the content of the conjugated diene monomer unit is 10-20 mass%, preferably 12-20 mass%, and more preferably 15-18 mass%. In the block copolymer composition, the vinyl aromatic hydrocarbon monomer unit and the conjugated diene monomer unit exist as the constituent units constituting the block copolymer. When the block copolymer composition contains two or more kinds of block copolymers, the contents of the units are calculated based on the total of each monomer unit in these block copolymers. The content of the conjugated diene monomer unit is, specifically for example, 10, 11, 12, 13, 14, 15, 16, 17, 18, 19, or 20 mass%, and may be in the range between the two values exemplified herein. The breakage resistance of the film to be obtained becomes good by making the content of the constituent unit derived from conjugated diene 12 mass% or more, and the natural shrinkage resistance and rigidity of the film to be obtained becomes good by making the content of the constituent unit derived from conjugated diene 20 mass% or less.

The content of the conjugated diene monomer unit can be calculated from the charged amount.

The content of the conjugated diene monomer unit may also be calculated by using a known halogen addition method. A measurement example of the general halogen addition method is as follows: the sample is dissolved in a solvent capable of completely dissolving it, then an excessive amount of iodine monochloride/carbon tetrachloride solution is added and allowed to react sufficiently, and the unreacted iodine monochloride is titrated with a sodium thiosulfate/ethanol solution. The content of the conjugated diene monomer unit is calculated from the double bond amount obtained by the above-mentioned method. For the content of the vinyl aromatic hydrocarbon unit, it can be calculated from the content of the conjugated diene monomer unit.

When the total of the vinyl aromatic hydrocarbon monomer unit and the conjugated diene monomer unit in the block copolymer composition is taken as 100 mass%, the content of the vinyl aromatic hydrocarbon monomer unit is preferably 80-90 mass%, more preferably 80-88 mass%, and even more preferably 82-85 mass%. When the block copolymer composition contains two or more kinds of block copolymers, the contents of the units are calculated based on the total of each monomer unit in these block copolymers. The content of the vinyl aromatic hydrocarbon monomer unit is, specifically for example, 80, 81, 82, 83, 84, 85, 86, 87, 88, 89, or 90 mass%, and may be in the range between the two values exemplified herein.

The block copolymer composition contains 60-100 mass% of the block copolymer having the structure represented by the following general formula P1. Preferably, the block copolymer composition contains 70-100 mass% of the block copolymer.

$$(S)-[(S/B)]_2 \qquad (P1)$$

In the general formula P1, "(S)" is the polymer chain of the vinyl aromatic hydrocarbon monomer unit. "(S)" is, for example, the polymer chain containing more than 95 mass% of the vinyl aromatic hydrocarbon monomer unit. Preferably, it is substantially composed of only the vinyl aromatic hydrocarbon monomer unit. Besides, " (S/B) " is the copolymer chain having the vinyl aromatic hydrocarbon monomer unit and the conjugated diene monomer unit.

In one aspect, the general formula P1 is preferably the structure represented by the following general formula P1-1 or P1-2.

$$(S)-(S/B)1-(S/B)2 \qquad (P1-1)$$

$$(S)-(S/B)2-(S/B)1 \qquad (P1-2)$$

In the general formula P1-1 or P1-2, " (S/B) 1" is the copolymer chain containing 84-95 mass% of the vinyl aromatic hydrocarbon monomer unit and 5-16 mass% of the conjugated diene monomer unit. The composition distribution of the vinyl aromatic hydrocarbon monomer unit and the conjugated diene monomer unit may be either in a random state (where the compositions of the vinyl aromatic hydrocarbon monomer unit and the conjugated diene monomer unit are almost constant) or in a tapered state (where the compositions of the vinyl aromatic hydrocarbon monomer unit and the conjugated diene monomer unit vary continuously). In one aspect, the composition distribution is preferably in a tapered state. The composition distribution of the copolymer chain is controlled by the amount and method of addition of each monomer in polymerization. The copolymer chain in which the composition distribution is in a tapered state can be obtained by adding an excessive amount of vinyl aromatic hydrocarbon (e.g., styrene) and conjugated diene (e.g., 1,3-butadiene) to the polymerization active terminals collectively and simultaneously.

"(S/B)2" is the copolymer chain containing the 40-75 mass% of the vinyl aromatic hydrocarbon monomer unit and 25-60 mass% of the conjugated diene monomer unit. The composition distribution of the vinyl aromatic hydrocarbon monomer unit and the conjugated diene monomer unit may be either in a random state (where the compositions of the vinyl aromatic hydrocarbon monomer unit and the conjugated diene monomer unit are almost constant) or in a tapered state (where the compositions of the vinyl aromatic hydrocarbon monomer unit and the conjugated diene monomer unit vary continuously). In one aspect, the composition distribution is preferably in a tapered state. The composition distribution of the copolymer chain is controlled by the amount and method of addition of each monomer in polymerization. "(S)" is the same as in the general formula P1.

The number average molecular weight of the block copolymer in the block copolymer composition in GPC (Gel Permeation Chromatograph) measurement is 100,000-200,000, and preferably 150,000-200,000 in terms of polystyrene. The number average molecular weight of any one of the block copolymers contained in the block copolymer composition needs to be in such a range. The block copolymer composition preferably contains 60-100 mass% of the block copolymer of which the number average molecular weight is in such a range. The number average molecular weight is, specifically for example, 100,000, 110,000, 120,000, 130,000, 140,000, 150,000, 160,000, 170,000, 180,000, 190,000, or 200,000, and may be in the range between the two values exemplified herein.

When the storage modulus measured at 70°C and the storage modulus measured at 100°C in dynamic viscoelasticity measurement measured in accordance with JIS K7244-1 and JIS K7244-5 under conditions of a temperature rising rate of 4°C/min and a frequency of 1 Hz are each defined as E'70 and E'100, the calculated value V based on the following formula F1 is $0.5 \times 10^{16}$ - $2.0 \times 10^{16}$, and preferably $1.0 \times 10^{16}$ - $2.0 \times 10^{16}$.

$$V=E'70 \times (E'70-E'100)/30 \qquad (F1)$$

The calculated value V based on the calculation formula F1 is, specifically for example, $0.5 \times 10^{16}$, $0.6 \times 10^{16}$, $0.7 \times 10^{16}$, $0.8 \times 10^{16}$, $0.9 \times 10^{16}$, $1.0 \times 10^{16}$, $1.1 \times 10^{16}$, $1.2 \times 10^{16}$, $1.3 \times 10^{16}$, $1.4 \times 10^{16}$, $1.5 \times 10^{16}$, $1.6 \times 10^{16}$, $1.7 \times 10^{16}$, $1.8 \times 10^{16}$, $1.9 \times 10^{16}$, or $2.0 \times 10^{16}$, and may be in the range between the two values exemplified herein.

The loss tangent value (tan δ) of the block copolymer composition in dynamic viscoelasticity measurement preferably has at least one peak in the range of 80-105°C, and more preferably has at least one peak in the range of 90-100°C. The temperature of any one of peaks of the loss tangent value (tan δ) is, specifically for example, 80, 81, 82, 83, 84, 85, 86, 87, 88, 89, 90, 91, 92, 93, 94, 95, 96, 97, 98, 99, 100, 101, 102, 103, 104, or 105°C, and may be in the range between the two values exemplified herein. The natural shrinkage rate of the heat-shrinkable film to be obtained can be prevented from increasing by making the temperature at which tan δ shows the peak 80°C or higher. The heat shrinkage rate of the heat-shrinkable film to be obtained can be sufficiently increased by making the temperature at which tan δ shows the peak 105°C or lower. It should be noted that the peak of tan δ is the indicator relating to the glass transition temperature.

The melt mass flow rate (MFR) of the block copolymer composition is in accordance with the method described in JIS K7210-1 (200°C, 5 kg). It is preferably 1-9 g/10 min, and more preferably 2-6 g/10 min.

The production method of the block copolymer according to one embodiment of the present invention is not particularly limited. For example, it is the method in which the vinyl aromatic hydrocarbon monomer unit and the conjugated diene monomer unit are polymerized in an organic solvent by using an organolithium compound as an initiator.

Examples of the organic solvent include aliphatic hydrocarbons such as butane, pentane, hexane, isopentane, heptane, octane, and isooctane; alicyclic hydrocarbons such as cyclopentane, methylcyclopentane, cyclohexane, methylcyclohexane, and ethylcyclohexane; and aromatic hydrocarbons such as benzene, toluene, ethyl benzene, and xylene.

The organolithium compound is a compound with one or more lithium atoms bonded in a molecule. Examples of the organolithium compound include monofunctional organic lithium compounds such as ethyl lithium, n-propyl lithium, isopropyl lithium, n-butyl lithium, sec-butyl lithium, and tert-butyl lithium; and multifunctional organic lithium compounds such as hexamethylenedilithium, butadienyldilithium, and isoprenyldilithium.

In living anionic polymerization, a block copolymer having an arbitrary primary structure can be obtained by changing the addition amount and addition method of monomers (vinyl aromatic hydrocarbon and conjugated diene), thereby enabling to control the physical property of the block copolymer. For example, the molecular weight can be controlled by the ratio of the organolithium compound to the monomers, and the storage modulus and loss tangent (tan δ) can be controlled by the ratio of the vinyl aromatic hydrocarbon to the conjugated diene in each block chain.

The block copolymer thus obtained is deactivated by adding a polymerization stopper such as water, alcohol, and carbon dioxide in an amount sufficient to deactivate the active terminals. As a method of recovering the copolymer from the obtained block copolymer solution, an arbitrary method, such as (A) a method of precipitating the copolymer with a poor solvent such as methanol, (B) a method of evaporating the solvent by a heating roll or the like to precipitate the copolymer (drum dryer method), (C) a method of removing the solvent by a vent extruder after concentration of the solution by a concentrator (devolatilization and extrusion method), and (D) a method of dispersing the solution in water and recovering the copolymer by heating and removing the solvent by blowing steam (steam stripping method) can be employed. In particular, the devolatilization and extrusion method is preferable.

The block copolymer composition according to one embodiment of the present invention is obtained by mixing at least one kind of block copolymer obtained by the above-mentioned production method or the like with other additives as needed.

Examples of other additives include various stabilizers, lubricants, processing aids, blocking inhibitors, antistatic agents, antifogging agents, light resistance improvers, softeners, plasticizers, and pigments. Each additive may be added to the block copolymer solution, or blended with the recovered copolymer and melt-mixed.

Examples of the stabilizer include phenolic antioxidants such as

2-tert-butyl-6-(3-tert-butyl-2-hydroxy-5-methylbenzyl)-4-methy lphenylacrylate, 2-[1-(2-hydroxy-3,5-di-tert-pentylphenyl)ethyl]-4, 6-di-tert-pentylphenylacrylate, octadecyl-3-(3,5-di-tert-butyl-4-hydroxyphenyl)propionate, and 2,6-di-tert-butyl-4-methylphenol; and phosphorus antioxidants such as trisnonylphenylphosphite. Examples of the blocking inhibitor, the antistatic agent, and the lubricant include fatty acid amides, ethylenebisstearamides, sorbitan monostearates, saturated fatty acid esters of aliphatic alcohols, and pentaerythritol fatty acid esters. Preferably, the used amounts of these additives are 5 mass% or less with respect to the block copolymer.

The block copolymer composition according to one embodiment of the present invention may contain two or more block copolymers, and a known method can be employed for mixing these block copolymers . For example, they can be dry-blended with a Henschel mixer, ribbon blender, super mixer, V-blender, or the like, or further melted and pelletized by an extruder. In one aspect, melt-mixing is preferable. A method of removing the solvent after mixing polymer solutions with each other can also be used.

2. Heat-shrinkable Film

The heat-shrinkable film according to one embodiment of the present invention is a heat-shrinkable film containing the above-mentioned block copolymer composition. The heat-shrinkable film can be obtained by uniaxial, biaxial, or multiaxial stretching of a sheet or film extruded by a known method such as a T-die method and a tubular method using the above-mentioned block copolymer composition. In particular, biaxial stretching by the T-die method is preferable.

Examples of the uniaxial stretching include a method of stretching the extruded sheet in the direction perpendicular to the extrusion direction by a tenter, and a method of stretching the extruded tubular film in a circumferential direction.

Examples of the biaxial stretching include a method of stretching the extruded sheet in the extrusion direction and then stretching it in the direction perpendicular to the extrusion direction by a tenter or the like, and a method of stretching the extruded tubular film in the extrusion direction and in the circumferential direction simultaneously or separately.

For example, the stretching temperature is preferably 60-120°C. The stretching temperature of lower than 60°C or higher than 120°C is not preferable because the sheet or film is broken during stretching when the stretching temperature is lower than 60°C, and good shrinkability and thickness precision are not obtained when the stretching temperature is higher than 120°C. The stretching ratio is not particularly limited, and preferably 1.5-8 times. The stretching ratio of lower than 1.5 times or higher than 8 times is not preferable because the heat-shrinkability is insufficient when the stretching ratio is lower than 1.5 times, and stretching is difficult when the stretching ratio is higher than 8 times. When such a film is used as a heat-shrinkable label or packaging material, the heat shrinkage rate needs to be 20% or higher at 80°C. The heat shrinkage rate of lower than 20% is not preferable because it needs a high temperature in shrinkage and adversely affect the article to which the film is to be attached. The thickness of the film is preferably 10-300 μm.

The above-mentioned heat-shrinkable film can be used as a heat-shrinkable label, a heat-shrinkable cap seal, or the like. In addition, it can be used as a packaging film or the like.

A container according to one embodiment of the present invention is a container such as a PET bottle to which the above-mentioned heat-shrinkable film is attached as a label or the like.

**Example**

Hereinafter, Examples are provided to further explain the present invention. These are all exemplary and do not limit the contents of the present invention.

[Preparation of Block Copolymer: P-1]

In a 1000-liter polymerization can, 467 liters of cyclohexane, 70.0 g of tetrahydrofuran, 1265 milliliters of n-butyl lithium (10% solution of cyclohexane), and 34 kg of styrene were added and allowed to react at 65°C for 30 minutes. Thereafter, 66 kg of styrene and 9 kg of butadiene were added and allowed to react at 50°C for 80 minutes. Subsequently, 66 kg of styrene and 25 kg of butadiene were added and allowed to react at 50°C for 170 minutes. Excess methanol was then added to the polymerization solution to stop the polymerization, and the solvent was removed and dried to obtain the desired block copolymer P-1. The above-mentioned "butadiene" is "1,3-butadiene", and will hereinafter be referred to simply as "butadiene".

[Preparation of Block Copolymer: P-2]

In a 1000-liter polymerization can, 467 liters of cyclohexane, 70.0 g of tetrahydrofuran, 2838 milliliters of n-butyl lithium (10% solution of cyclohexane), and 62 kg of styrene were added and allowed to react at 65°C for 60 minutes. Thereafter, 120.1 kg of styrene and 17.9 kg of butadiene were added and allowed to react at 40°C for 190 minutes. Excess methanol was then added to the polymerization solution to stop the polymerization, and the solvent was removed and dried to obtain the desired block copolymer P-2.

[Preparation of Block Copolymer: P-3]

In a 1000-liter polymerization can, 467 liters of cyclohexane, 70.0 g of tetrahydrofuran, 1503 milliliters of n-butyl lithium (10% solution of cyclohexane), and 32 kg of styrene were added and allowed to react at 65°C for 30 minutes. Thereafter, 40.99 kg of styrene and 5.01 kg of butadiene were added and allowed to react at 50°C for 50 minutes. Subsequently, 92.96 kg of styrene and 29.04 kg of butadiene were added and allowed to react at 50°C for 200 minutes. Excess methanol was then added to the polymerization solution to stop the polymerization, and the solvent was removed and dried to obtain the desired block copolymer P-3.

[Preparation of Block Copolymer: P-4]

In a 1000-liter polymerization can, 467 liters of cyclohexane, 70.0 g of tetrahydrofuran, 1265 milliliters of n-butyl lithium (10% solution of cyclohexane), and 34 kg of styrene were added and allowed to react at 65°C for 30 minutes. Thereafter, 66 kg of styrene and 9 kg of butadiene were added and allowed to react at 50°C for 80 minutes. Subsequently, 65.98 kg of styrene and 25.03 kg of butadiene were added and allowed to react at 50°C for 170 minutes. Excess methanol was then added to the polymerization solution to stop the polymerization, and the solvent was removed and dried to obtain the desired block copolymer P-4.

[Preparation of Block Copolymer: P-5]

In a 1000-liter polymerization can, 467 liters of cyclohexane, 70.0 g of tetrahydrofuran, 1336 milliliters of n-butyl lithium (10% solution of cyclohexane), and 32 kg of styrene were added and allowed to react at 65°C for 30 minutes. Thereafter, 40.99 kg of styrene and 5.01 kg of butadiene were added and allowed to react at 50°C for 50 minutes. Subsequently, 44.01 kg of styrene and 9.99 kg of butadiene were added and allowed to react at 50°C for 110 minutes.

Then, 49.03 kg of styrene and 18.97 kg of butadiene were added and allowed to react at 50°C for 140 minutes. Excess methanol was then added to the polymerization solution to stop the polymerization, and the solvent was removed and dried to obtain the desired block copolymer P-5.

[Preparation of Block Copolymer: P-6]

In a 1000-liter polymerization can, 467 liters of cyclohexane, 70.0 g of tetrahydrofuran, 1679 milliliters of n-butyl lithium (10% solution of cyclohexane), and 32 kg of styrene were added and allowed to react at 65°C for 30 minutes. Thereafter, 61.03 kg of styrene and 14.97 kg of butadiene were added and allowed to react at 50°C for 30 minutes. Subsequently, 58.97 kg of styrene and 33.03 kg of butadiene were added and allowed to react at 50°C for 170 minutes. Excess methanol was then added to the polymerization solution to stop the polymerization, and the solvent was removed and dried to obtain the desired block copolymer P-6.

[Preparation of Block Copolymer: P-7]

In a 1000-liter polymerization can, 467 liters of cyclohexane, 70.0 g of tetrahydrofuran, 1404 milliliters of n-butyl lithium (10% solution of cyclohexane), and 122 kg of styrene were added and allowed to react at 60°C for 90 minutes. Thereafter, 46.02 kg of styrene and 31.98 kg of butadiene were added and allowed to react at 50°C for 160 minutes. Excess methanol was then added to the polymerization solution to stop the polymerization, and the solvent was removed and dried to obtain the desired block copolymer P-7.

[Preparation of Block Copolymer: P-8]

In a 1000-liter polymerization can, 467 liters of cyclohexane, 70.0 g of tetrahydrofuran, 4072 milliliters of n-butyl lithium (10% solution of cyclohexane), and 44 kg of styrene were added and allowed to react at 80°C for 50 minutes. Thereafter, 92.04 kg of styrene and 63.96 kg of butadiene were added and allowed to react at 40°C for 200 minutes. Excess methanol was then added to the polymerization solution to stop the polymerization, and the solvent was removed and dried to obtain the desired block copolymer P-8.

<Number Average Molecular Weight>

[GPC Measurement]

GPC measurements of the block copolymers were performed using the following GPC measurement equipment and conditions.

    Equipment Name: HLC-8220GPC (made by Tosoh Corporation)
    Column: ShodexGPCKF-404 (made by Showa Denko K.K.), 4 columns connected in series
    Temperature: 40°C
    Detection: differential refractive index
    Solvent: tetrahydrofuran
    Concentration: 0.2 mass%
    Calibration Curve: prepared using standard polystyrene (made by Varian, Inc.)

Table 1 shows the structures of the block copolymers P-1 - P-8, the mass ratios of each block contained in each block copolymer, and the mass ratios of styrene and butadiene in each block (ratio of the monomer units in the block [SM/BM]). The block represented simply as (S/B) in the general formula representing the structure is the (S/B) block belonging to neither (S/B)1 nor (S/B)2. When the structure (general formula) of the block copolymer is shown in Table 1, blocks are referred to as first block, second block, third block, and fourth block, in order from the block on the left. In Table 1, "SM" and "BM" represent monomer units derived from styrene and butadiene, respectively.

[Table 1]

| Table 1 | | | P-1 | P-2 | P-3 | P-4 | P-5 | P-6 | P-7 | P-8 |
|---|---|---|---|---|---|---|---|---|---|---|
| Structure of Block Copolymer | | | (S)-[(S/B) 1]-[(S/B)2] | (S)-[(S/B) 1] | (S)-[(S/B) 1]-[(S/B)] | (S)-[(S/B) 1]-[(S/B)2] | (S)-[(S/B) 1]-[(S/B)]-[(S/B) 2] | (S)-[(S/B)]-[(S/B) 2] | (S)-[(S/B) 2] | (S)-[(S/B) 2] |
| First Block | Content of Block | mass% | 17 | 31 | 16 | 17 | 16 | 16 | 61 | 22 |
| | Ratio of Monomer Units in Block [SM/BM] | | 100/0 | 100/0 | 100/0 | 100/0 | 100/0 | 100/0 | 100/0 | 100/0 |
| Second Block | Content of Block | | 37.5 | 69 | 23 | 37.5 | 23 | 38 | 39 | 78 |
| | Ratio of Monomer Units in Block [SM/BM] | | 88/12 | 87/13 | 89.1/10.9 | 88/12 | 89.1/10.9 | 80.3/19.7 | 59/41 | 59/41 |
| Third Block | Content of Block | | 45.5 | - | 61 | 45.5 | 27 | 46 | - | - |
| | Ratio of Monomer Units in Block [SM/BM] | | 72.5/27.5 | - | 76.2/23.8 | 72.5/27.5 | 81.5/18.5 | 64.1/35.9 | - | - |
| Fourth Block | Content of Block | | - | - | - | - | 34 | - | - | - |
| | Ratio of Monomer Units in Block [SM/BM] | | - | - | - | - | 72.1/27.9 | - | - | - |
| Molecular Weight | | x 10000 g/mol | 19 | 8 | 16 | 19 | 18 | 15 | 17 | 6.5 |

EP 4 296 316 A1

[Examples 1-3 and Comparative Examples 1-3]

The Block copolymer compositions were obtained by mixing each block copolymer in accordance with the compositions in Table 2 by melt-kneading as needed. The content (mass%) of each block copolymer P-1 - P-8 in Table 2 represents the ratio of each block copolymer when the total amount of the block copolymer having the vinyl aromatic hydrocarbon monomer unit and the conjugated diene monomer unit added to the block copolymer composition is taken as 100 mass%. The styrene ratio is the ratio of the vinyl aromatic hydrocarbon monomer unit such as styrene. The butadiene ratio is the ratio of the conjugated diene monomer unit such as butadiene.

A biaxial stretching equipment using the T-die method was used to prepare the heat-shrinkable films for various measurements and evaluations. Each of the block copolymer compositions described in Examples or Comparative Examples was extruded at a temperature of 210°C by a sheet extruder equipped with a T-die to form a sheet with a thickness of approximately 0.3 mm, and stretched by 1.2 times in the flow direction (MD) by a longitudinal stretching machine at a line speed of 10 m/min at 80°C. Thereafter, it was stretched by 4.5 times in the direction perpendicular to the flow direction (TD) by a lateral stretching machine at 90°C, thereby obtaining the heat-shrinkable film with an average thickness of approximately 50 um.

The following methods and criteria were used for physical properties and evaluations.

The ratios of styrene and butadiene contained in the block copolymer composition were calculated by the following method based on the addition amounts of raw materials used for the synthesis of each block copolymer.

$$\text{(Styrene ratio (mass\%))} = \text{(total addition amount of styrene)} / \text{(total addition amount of styrene and butadiene)} \times 100$$

$$\text{(Butadiene ratio (mass\%))} = \text{(total addition amount of butadiene)} / \text{(total addition amount of styrene and butadiene)} \times 100$$

<MFR>

The melt mass flow rate (MFR) of the block copolymer composition was measured under the condition of 200°C and 5 kg in accordance with JIS K 7210-1. The MFRs of the block copolymer compositions of Examples 1-3 were all in the range of 1-6 g/10 min.

<Dynamic Viscoelasticity Measurement>

The storage modulus (E') of the block copolymer composition was measured in accordance with the following procedure based on JIS K7244-1 and JIS K7244-5. The loss tangent value (tan δ) was calculated by dividing the simultaneously measured loss modulus (E") by (E').

(1) A molded product with a thick of 4 mm and a width of 10 mm was made by injection molding using pellets of each block copolymer composition, and a test piece with an appropriate size was cut from this molded product. It was stored in a room at 23°C at 50% RH for 48 hours for curing treatment.
(2) The storage modulus (E') and the loss modulus (E") were measured in the temperature range from room temperature to 120°C at the temperature increase rate of 4°C/min and the measurement frequency of 1 Hz using the dynamic viscoelasticity measurement equipment RSA3 made by TA Instruments, Inc. The following formula was used to calculate the loss tangent value (tan δ) in the above-mentioned temperature range.

$$\tan \delta = E''/E'$$

From the dynamic viscoelasticity measurement of the block copolymer composition, the temperature at which the loss tangent value (tan δ) shows the peak was read, and the values of the storage moduli E'30 at 30°C, E'70 at 70°C, and E'100 at 100°C were read to calculate the calculated value V in accordance with the calculation formula F1.

<Tensile Test>

The tensile breaking strength of the block copolymer composition was measured in accordance with JIS K7161-1 by using a dumbbell-shaped test piece Type A prepared in accordance with JIS K7139, and evaluated in accordance with the following criteria.

Excellent: tensile breaking strength is higher than 75 MPa
Good: tensile breaking strength is 60-75 MPa
Bad: tensile breaking strength is lower than 60 MPa

<Flexural Modulus>

The flexural modulus of the block copolymer composition was measured in accordance with JIS K7171 by using a strip-shaped test piece Type B prepared in accordance with JIS K 7139, and evaluated in accordance with the following criteria.

Excellent: flexural modulus is higher than 1200 MPa
Good: flexural modulus is 1000-1200 MPa
Bad: flexural modulus is lower than 1000 MPa

<Heat Shrinkage Rate>

The heat shrinkage rate of the heat-shrinkable film was measured by the following method after making the heat-shrinkable film.

(1) A test piece with a MD width of 100 mm and a TD width of 100 mm was cut from the heat-shrinkable film. In the present specification, the MD width is the length of the heat-shrinkable film test piece along its MD (the extrusion flow direction during film production), and the TD width is likewise the length along its TD (the direction perpendicular to MD).
(2) The test piece was completely immersed in warm water at 70°C, 80°C, 90°C, or 100°C for 10 seconds. Thereafter, it was removed therefrom and sufficiently wiped, and then the TD length L (mm) was measured.
(3) The heat shrinkage rate was calculated based on the following formula.

$$\text{Heat shrinkage rate (\%)} = \{(100-L)/100\} \times 100$$

<Attained Shrinkage Rate>

For the heat shrinkage rate under the condition of 100°C for 10 seconds in the TD direction, the attained shrinkage rate of the heat-shrinkable film was evaluated in accordance with the following criteria.

Excellent: higher than 70%
Good: 50-70%
Bad: lower than 50%

[Measurement of Natural Shrinkage Rate]

The natural shrinkage rate was measured by the following method.

(1) A test piece with the MD width of 100 mm and the TD width of 350 mm was cut from the heat-shrinkable film.
(2) Reference lines were provided at the center part of the test piece such that the TD reference line interval was 300 mm. The test piece was stored in an environmental testing machine at 40°C. The reference line interval N (mm) was measured after 7 days of storage.
(3) The natural shrinkage rate was calculated based on the following formula.

$$\text{Natural shrinkage rate (\%)} = \{(300-N)/300\} \times 100$$

<Natural Shrinkage Resistance>

For the natural shrinkage resistance obtained by measuring the heat shrinkage rate under the condition of 40°C for 168 hours in the TD direction, the natural shrinkage resistance of the heat-shrinkable film was evaluated in accordance with the following criteria.

Excellent: lower than 10%
Good: 10-30%
Bad: higher than 30%

<Shrinkage Finishability>

The shrinkage finishability of the heat-shrinkable film was evaluated by visually judging the appearance of the film after shrinkage in accordance with the following criteria.

Excellent: the test piece after measuring the heat shrinkage rate does not show any of wrinkling, distortion, and waving under all conditions of 70°C, 80°C, 90°C, and 100°C.

Good: the test piece after measuring the heat shrinkage rate shows any of wrinkling, distortion, and waving under any one of the conditions of 70°C, 80°C, 90°C, and 100°C.

Bad: the test piece after measuring the heat shrinkage rate shows any of wrinkling, distortion, and waving under two or more of the conditions of 70°C, 80°C, 90°C, and 100°C.

[Table 2]

| Table 2 | | | Examples | | | Comparative Examples | | |
|---|---|---|---|---|---|---|---|---|
| | | | 1 | 2 | 3 | 1 | 2 | 3 |
| Composition | P-1 | mass% | 70 | | | | | |
| | P-2 | mass% | 30 | | | | | |
| | P-3 | mass% | | 100 | | | | |
| | P-4 | mass% | | | 100 | | | |
| | P-5 | mass% | | | | 100 | | |
| | P-6 | mass% | | | | | 100 | |
| | P-7 | mass% | | | | | | 70 |
| | P-8 | mass% | | | | | | 30 |
| | Styrene Ratio | mass% | 83 | 83 | 83 | 83 | 76 | 84 |
| | Butadiene ratio | mass% | 17 | 17 | 17 | 17 | 24 | 16 |

EP 4 296 316 A1

(continued)

| Table 2 | | | | Examples | | | Comparative Examples | | |
|---|---|---|---|---|---|---|---|---|---|
| | | | | 1 | 2 | 3 | 1 | 2 | 3 |
| Physical Property | MFR | 20°C,5kg | g/10min | 5.5 | 4 | 1.7 | 4.8 | 5.6 | 9.7 |
| | tan$\delta$ Peak Temperature | | °C | 94 | 97 | 97 | 86 | 91 | 108 |
| | E'70×(E'70-E'100)/30 * | | Pa$^2$/°C | 1.70E+16 | 1.02E+16 | 1.03E+16 | 1.88E+15 | 1.72E+15 | 3.18E+16 |
| | E' gradient 70-100 | | Pa/°C | -2.5E+07 | -1.9E+07 | -1.8E+07 | -7.5E+06 | -7.4E+06 | -2.8E+07 |
| | E' | 70 | MPa | 717E+08 | 5.58.E+08 | 5.60.E+08 | 2.40.E+08 | 2.30.E+08 | 1.13.E+09 |
| | | 80 | MPa | 418E+08 | 2.76.E+08 | 2.68.E+08 | 5.23.E+07 | 8.51.E+07 | 9.05.E+08 |
| | | 90 | MPa | 102E+08 | 6.28.E+07 | 7.23. E+07 | 9.15.E+06 | 1.64. E+07 | 6.38.E+08 |
| | | 100 | MPa | 4.82.E+06 | 8.13.E+06 | 9.69. E+06 | 3.96.E+06 | 5.04.E+06 | 2.80.E+08 |
| | Tensile Test (Tensile Breaking Strength) | | MPa | 97 | 78 | 82 | 74 | 66 | 87 |
| | Flexural Modulus | | MPa | 1564 | 1260 | 1340 | 1180 | 730 | 1980 |
| | Heat Shrinkage Rate | 70°C,10 sec | % | 9 | 17 | 16 | 35 | 38 | 4 |
| | | 80°C,10 sec | % | 30 | 40 | 45 | 58 | 54 | 14 |
| | | 90°C,10 sec | % | 58 | 65 | 64 | 69 | 62 | 32 |
| | | 100°C,10 sec | % | 74 | 72 | 72 | 73 | 68 | 55 |
| | Natural Shrinkage Rate | 4°C | % | 3.85 | 8.03 | 6.16 | 17.53 | 26.61 | 3.66 |
| Evaluation | Tensile Breaking Strength | | | Excellent | Excellent | Excellent | Good | Good | Excellent |
| | Flexural Modulus | | | Excellent | Excellent | Excellent | Good | Bad | Excellent |
| | Attained Shrinkage Rate | | | Excellent | Excellent | Excellent | Excellent | Good | Good |
| | Natural Shrinkage Resistance | | | Excellent | Excellent | Excellent | Good | Good | Excellent |
| | Shrinkage Finishability (Appearance after Heat-shrinkage) | | | Excellent | Excellent | Excellent | Good | Good | Good |
| * Calculated value V base on the calculation formula V1 | | | | | | | | | |

EP 4 296 316 A1

15

**Claims**

1. A block copolymer composition containing at least one kind of a block copolymer having a vinyl aromatic hydrocarbon monomer unit and a conjugated diene monomer unit, wherein the block copolymer composition satisfies following (1)-(4):

    (1) when a total of the vinyl aromatic hydrocarbon monomer unit and the conjugated diene monomer unit in the block copolymer composition is taken as 100 mass%, a content of the conjugated diene monomer unit is 10-20 mass%;
    (2) the block copolymer composition contains 60-100 mass% of a block copolymer having a structure represented by a following general formula P1:

    $$(S)-[(S/B)]_2 \qquad (P1)$$

    in the general formula P1, (S) is a polymer chain of the vinyl aromatic hydrocarbon monomer unit, and (S/B) is a copolymer chain having the vinyl aromatic hydrocarbon monomer unit and the conjugated diene monomer unit;
    (3) a number average molecular weight of the block copolymer contained in the block copolymer composition is 100,000-200,000; and
    (4) when a storage modulus measured at 70°C and a storage modulus measured at 100°C in dynamic viscoelasticity measurement measured in accordance with JIS K7244-1 and JIS K7244-5 under conditions of a temperature rising rate of 4°C/min and a frequency of 1 Hz are each defined as E'70 and E'100, a calculated value V based on a following calculation formula F1 is $0.5 \times 10^{16}$ - $2.0 \times 10^{16}$

    $$V = E'70 \times (E'70 - E'100)/30 \qquad (F1).$$

2. The heat-shrinkable film containing the block copolymer composition of Claim 1.

3. A container to which the heat-shrinkable film of Claim 2 is attached.

## INTERNATIONAL SEARCH REPORT

| International application No. |
|---|
| PCT/JP2021/025044 |

A.   CLASSIFICATION OF SUBJECT MATTER
C08L 53/02(2006.01)i; C08J 5/18(2006.01)i
FI: C08L53/02; C08J5/18 CEQ
According to International Patent Classification (IPC) or to both national classification and IPC

B.   FIELDS SEARCHED

Minimum documentation searched (classification system followed by classification symbols)
C08L53/02; C08J5/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2020-164745 A (DENKA CO LTD) 08 October 2020 (2020-10-08) claims, paragraphs [0005], [0015]-[0018], [0024], [0028], [0046], [0051]-[0103], tables 1-2 | 1-3 |
| X | JP 11-228783 A (DENKI KAGAKU KOGYO KK) 24 August 1999 (1999-08-24) claims, paragraphs [0003], [0007]-[0011], [0013], [0044]-[0059] | 1-3 |
| X | JP 2000-006321 A (DENKI KAGAKU KOGYO KK) 11 January 2000 (2000-01-11) claims, paragraphs [0001], [0003], [0007]-[0010], [0014], [0037]-[0059] | 1-3 |
| X | JP 2004-269743 A (DENKI KAGAKU KOGYO KK) 30 September 2004 (2004-09-30) paragraphs [0049]-[0055] | 1-3 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September 2021 (01.09.2021) | 14 September 2021 (14.09.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

<table>
<tr><td colspan="3" align="center"><b>INTERNATIONAL SEARCH REPORT</b></td><td>International application No.<br>PCT/JP2021/025044</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2017-039873 A (DENKA CO LTD) 23 February 2017 (2017-02-23) entire text | 1-3 |
| A | JP 2007-008984 A (ASAHI KASEI CHEMICALS CORP) 18 January 2007 (2007-01-18) entire text | 1-3 |
| A | JP 2014-210399 A (ASAHI KASEI CHEMICALS CORP) 13 November 2014 (2014-11-13) entire text | 1-3 |

Form PCT/ISA/210 (continuation of second sheet) (January 2015)

INTERNATIONAL SEARCH REPORT
Information on patent family members

International application No.

PCT/JP2021/025044

| Patent Documents referred in the Report | Publication Date | Patent Family | Publication Date |
|---|---|---|---|
| JP 2020-164745 A | 08 Oct. 2020 | (Family: none) | |
| JP 11-228783 A | 24 Aug. 1999 | (Family: none) | |
| JP 2000-006321 A | 11 Jan. 2000 | (Family: none) | |
| JP 2004-269743 A | 30 Sep. 2004 | (Family: none) | |
| JP 2017-039873 A | 23 Feb. 2017 | (Family: none) | |
| JP 2007-008984 A | 18 Jan. 2007 | (Family: none) | |
| JP 2014-210399 A | 13 Nov. 2014 | (Family: none) | |

Form PCT/ISA/210 (patent family annex) (January 2015)

**EP 4 296 316 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3543917 B